(19) Europäisches Patentamt
European Patent Office
Office européen des brevets

(11) **EP 2 304 512 B1**

(12) **FASCICULE DE BREVET EUROPEEN**

(45) Date de publication et mention
de la délivrance du brevet:
**07.05.2014 Bulletin 2014/19**

(21) Numéro de dépôt: **09740357.0**

(22) Date de dépôt: **22.07.2009**

(51) Int Cl.:
**H04B 10/118** *(2013.01)*

(86) Numéro de dépôt international:
**PCT/FR2009/051469**

(87) Numéro de publication internationale:
**WO 2010/010297 (28.01.2010 Gazette 2010/04)**

(54) **TERMINAL DE COMMUNICATION OPTIQUE A POINTAGE ASSERVI PAR BOUCLE SIMPLE**

OPTISCHES KOMMUNIKATIONSENDGERÄT MIT DURCH EINE EINFACHE SERVOSCHLEIFE GESTEUERTEM RICHTEN

OPTICAL COMMUNICATION TERMINAL WITH POINTING CONTROLLED BY SIMPLE SERVO LOOP

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **24.07.2008 FR 0855079**

(43) Date de publication de la demande:
**06.04.2011 Bulletin 2011/14**

(73) Titulaire: **ASTRIUM SAS**
**92150 Suresnes (FR)**

(72) Inventeur: **VAILLON, Ludovic**
**31400 Toulouse (FR)**

(74) Mandataire: **Cabinet Plasseraud**
**52, rue de la Victoire**
**75440 Paris Cedex 09 (FR)**

(56) Documents cités:
| | |
|---|---|
| **US-A- 5 237 166** | **US-A- 5 539 562** |
| **US-A- 6 097 481** | **US-A1- 2005 025 492** |
| **US-A1- 2005 265 724** | **US-A1- 2006 024 061** |
| **US-B1- 6 970 651** | |

**Description**

La présente invention concerne un terminal de communication optique à pointage asservi par boucle simple («free space laser communication terminal with single loop-controlled pointing» en anglais).

Elle aussi concerne un relais de communication qui comprend un tel terminal.

Elle concerne enfin un procédé d'orientation d'un champ d'entrée d'un système d'émission-réception de signaux laser, qui peut être utilisé lors d'une phase de poursuite.

La transmission optique par faisceau laser est utilisée pour transmettre des données entre deux points mobiles l'un par rapport à l'autre. Par exemple, elle peut être utilisée pour une communication entre deux satellites artificiels, entre un satellite et un aéronef, un satellite et une base terrestre, etc.

Dans ce mode de transmission, deux terminaux qui sont en communication réciproque produisent chacun un faisceau laser en direction de l'autre terminal. Chaque terminal est simultanément émetteur et récepteur, de sorte que des données peuvent être transmises dans les deux sens entre les deux terminaux. Les données sont codées de façon appropriée pour être transmises par modulation des faisceaux laser. Même si l'un des émetteurs n'a pas de données à transmettre momentanément, il produit néanmoins un signal non-modulé qui est utilisé pour le pointage de l'autre terminal.

Etant donné qu'un faisceau laser présente une divergence qui est très faible, chaque terminal doit être orienté précisément dans la direction de l'autre terminal, pour que le faisceau laser qu'il transmet traverse la pupille de réception du terminal récepteur. Cette exigence de pointage des deux terminaux intervient pendant la phase de communication qui correspond à la transmission des données. Cette phase est appelée couramment étape de poursuite. Pendant celle-ci, le pointage de chaque terminal doit être maintenu malgré le déplacement relatif des deux terminaux.

Pour cela, selon l'art antérieur, chaque terminal comporte un système d'émission-réception de signaux laser, qui comprend une matrice de photodétecteurs agencée pour détecter le faisceau laser reçu. Lors de l'étape de poursuite, une déviation est mesurée entre la direction de réception de ce faisceau laser et une direction de référence. La direction de pointage du système d'émission-réception est alors commandée pour annuler sensiblement cette déviation.

Dans les terminaux de communication optique connus avant la présente invention, le système d'émission-réception est associé à deux systèmes de pointage différents, qui ajustent ensemble la direction de pointage.

Le premier système, appelé mécanisme de pointage grossier ou CPM pour «Coarse Pointing Mechanism» en anglais, comprend deux moteurs qui sont agencés pour varier une orientation du champ d'entrée optique du système d'émission-réception, selon deux directions de rotation distinctes. Ce système de pointage grossier peut varier la direction de pointage sur un domaine angulaire large, hémisphérique pour certaines applications et généralement supérieur à 10 degrés selon les deux directions de rotation. Mais sa précision est insuffisante par rapport à la finesse des faisceaux laser utilisés, qui présentent en général une divergence de l'ordre de quelques microradians.

Pour cette raison, un second système de pointage est ajouté, qui est appelé mécanisme de pointage fin, ou FPM pour «Fine Pointing Mechanism». Celui-ci comprend un miroir orientable qui est disposé à proximité de la matrice de photodétecteurs, et qui est orienté pour annuler sensiblement la déviation du faisceau reçu par rapport à la direction de référence. Ce système de pointage fin possède un temps de réponse plus court et une meilleure résolution angulaire que le système de pointage grossier, de sorte qu'il pallie la précision faible de ce dernier pour réaliser, globalement, l'exigence de précision du pointage du système d'émission-réception pendant l'étape de poursuite. La précision du pointage qui est obtenue ainsi est usuellement inférieure au microradian.

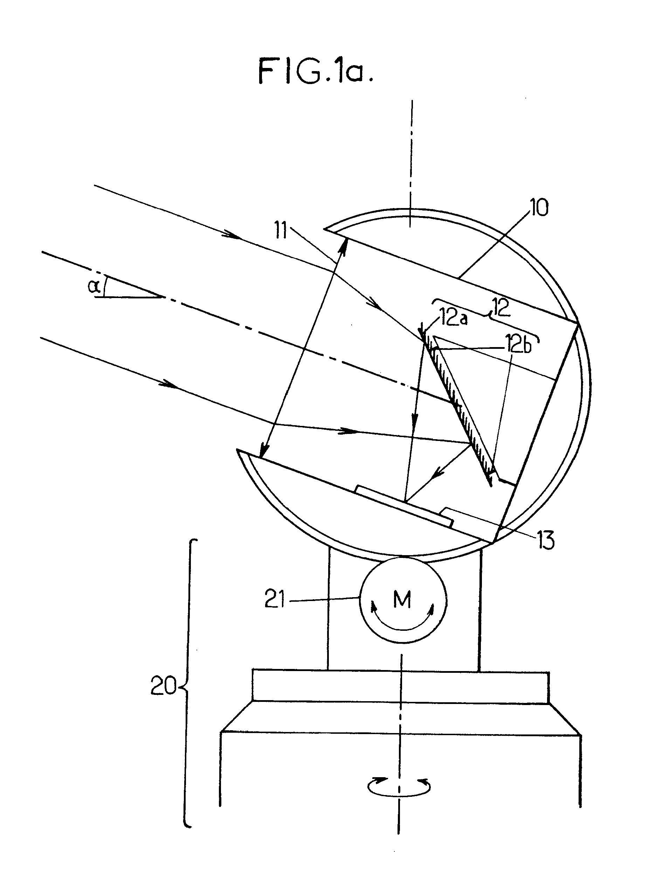

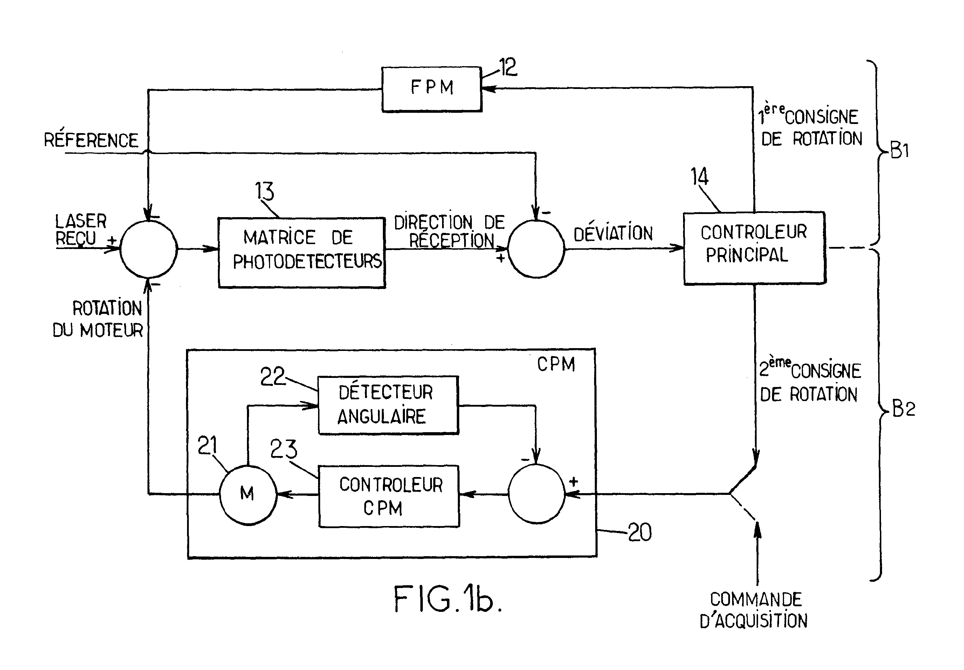

La figure 1 a représente les principaux composants d'un tel terminal de communication optique connu de l'art antérieur. Sur cette figure, la référence 10 désigne le système d'émission-réception, qui comprend lui-même un télescope 11, un système de pointage fin 12 et une matrice de photodétecteurs 13. Le télescope 11 est représenté symboliquement sous la forme d'une lentille convergente, mais il est entendu qu'il peut être d'un type quelconque connu de l'Homme du métier. Le télescope 11 et la matrice 13 sont fixes à l'intérieur du système d'émission-réception 10.

Le système de pointage fin 12 est agencé à l'intérieur du système d'émission-réception 10. Il comprend en général un miroir 12a et des actionneurs 12b qui sont disposés pour varier une orientation du miroir 12a, en produisant une rotation de ce dernier. Le champ d'entrée optique du système 10, qui est associé à une portion fixe de la matrice 13, est ainsi varié d'une première façon interne au système 10 lui-même.

Le système d'émission-réception 10 est agencé sur un système de pointage grossier 20, à au moins deux axes. Des moteurs, qui peuvent être du type à courant continu, permettent de varier l'orientation du système 10 autour de ces axes. Les figures 1a et 1b ne représentent qu'un seul moteur, qui est référencé 21 et qui contrôle l'élévation $\alpha$ de la direction de pointage, mais il est entendu qu'au moins un autre moteur permet de contrôler une variation du plan d'élévation. Le champ d'entrée optique du système 10 est ainsi varié d'une seconde façon, en activant le système de pointage grossier 20.

La configuration du terminal de communication optique qui est représentée sur la figure 1a n'est donnée qu'à titre d'illustration, et il existe d'autres configurations équivalentes. Par exemple, le système d'émission-réception 10 peut être fixe, et un miroir de pointage qui est disposé devant l'entrée des rayonnements dans le télescope 11 peut être orienté de façon variable par le système de pointage grossier.

La figure 1b illustre le contrôle du pointage du terminal de la figure 1 a pendant l'étape de poursuite. La direction de réception du faisceau laser qui est émis par le terminal de communication optique distant est déterminée à partir de signaux de détection produits par la matrice de photodétecteurs 13. Une déviation de la direction de réception par rapport à une direction de référence en est déduite, qui est transmise à un contrôleur principal 14. De façon connue, la direction de référence est calculée en additionnant un écart constant entre des directions respectives d'émission et de réception du système 10 d'une part, et un écart de pointage-avant d'autre part, pour tenir compte du déplacement relatif des deux terminaux pendant la durée d'une transmission de signaux laser. Le contrôleur principal 14 produit une première consigne de rotation qui est transmise au système de pointage fin 12, ainsi qu'une seconde consigne de rotation qui est transmise au système de pointage grossier 20. Ces deux consignes de rotation sont déterminées pour que la combinaison des rotations correspondantes, respectivement du système 12 et du système 20, tendent à annuler la déviation de la direction du faisceau laser reçu par rapport à la direction de référence. En outre, le contrôleur 14 détermine la seconde consigne de rotation pour éviter qu'une saturation du système de pointage fin 12 ne soit atteinte.

Un tel contrôle de la direction de pointage met donc en oeuvre deux boucles d'asservissement distinctes, à partir de la matrice de photodétecteurs 13. Une première boucle d'asservissement, notée B1, comprend le système de pointage fin 12 et la partie du contrôleur principal 14 qui produit la première consigne de rotation. La seconde boucle d'asservissement, notée B2, comprend le système de pointage grossier 20 et la partie du contrôleur principal 14 qui produit la seconde consigne de rotation.

Ces deux boucles d'asservissement prévues pour contrôler la direction de pointage du système d'émission-réception 10 ne doivent pas être confondues avec une ou plusieurs boucles supplémentaires qui peuvent être prévues pour produire les rotations du système de pointage grossier 20. En effet, de façon usuelle, les positions angulaires des moteurs du système 20 sont déterminées par des détecteurs respectifs de position angulaire 22 et contrôlées par un contrôleur dédié 23. Chaque détecteur 22 peut comprendre, par exemple, un codeur optique de la position angulaire du moteur correspondant.

De telles boucles supplémentaires sont internes au système de pointage grossier 20, et assurent que les rotations qui sont commandées pour le système 20 par le contrôleur principal 14 sont bien réalisées par les moteurs de celui-ci. Mais elles n'engendrent par elles-mêmes aucun ajustement de la seconde consigne de rotation.

Lors d'une étape d'acquisition, qui consiste à rechercher en boucle ouverte le faisceau laser qui est transmis par l'autre terminal, une commande externe de rotation, notée commande d'acquisition sur la figure 1b, est transmise au système de pointage grossier 20, le contrôleur principal 14 étant alors déconnecté du système 20. Les boucles d'asservissement des rotations des moteurs du système de pointage grossier 20, internes à ce système, assurent que les rotations qui sont produites sont conformes à la consigne d'acquisition.

Mais un terminal conforme aux figures 1a et 1b, qui met en oeuvre deux boucles d'asservissement pendant l'étape de poursuite, présentent les inconvénients suivants :

- le système de pointage fin 12 contribue de façon notable au coût total du terminal de communication optique ;

- le système de pointage fin 12 comporte des pièces mobiles dont les déplacements doivent être précis. Il est donc fragile par rapport à des accélérations fortes telles que celles du lancement d'un satellite à bord duquel le terminal est installé ; et

- le contrôleur principal 14 est complexe, pour produire les deux consignes de rotation qui sont destinées respectivement aux systèmes 12 et 20.

Un but de la présente invention est donc de fournir un terminal de communication optique qui ne présente pas ces inconvénients, ou pour lequel certains de ceux-ci sont réduits.

Le document US 6,970,651 concerne un terminal de communication optique qui est adaptée pour moduler les signaux transmis dans le but de compenser des conditions climatiques défavorables.

Le document US 2006/024061 concerne un système de communication optique dans lequel un détecteur de front d'onde et des mécanismes de correction du front d'onde permettent de stabiliser la puissance lumineuse qui est détectée à la réception, en dépit de turbulences atmosphériques qui sont traversées par le faisceau de transmission. Ces systèmes sont basés sur l'utilisation de systèmes de pointage fin à miroirs orientables.

Le document US 6,097,481 concerne une amélioration d'un algorithme d'acquisition et de poursuite qui est basé sur la détection de changements de signes. Une consigne de rotation des moteurs d'un système de pointage est élaborée, en additionnant un paramètre de gain corrigé par le signe de l'erreur de pointage avec une estimation de la vitesse de déplacement du terminal-cible.

Selon un premier aspect de la présente invention, celle-ci propose un terminal de communication optique qui est adapté pour réaliser des communications par modulation de faisceau laser avec au moins un autre terminal distant, situé à une distance de communication supérieure à 10 000 km. Le pointage est asservi par une boucle simple de rétroaction, avec une précision qui est comprise entre 2 et 20 $\mu$rad. Le terminal comprend un système d'émission-réception de signaux laser et un système de pointage unique.

Le système d'émission-réception de signaux laser comprend lui-même une matrice de photodétecteurs qui est agencée pour détecter un faisceau laser reçu, produit par le terminal distant. Il est en outre adapté pour produire, lors d'une étape de poursuite, au moins deux signaux qui sont représentatifs d'une déviation du faisceau laser reçu par rapport à une direction de référence.

Le système de pointage comprend au moins deux moteurs qui sont agencés pour varier selon deux directions de rotation distinctes, une orientation d'un champ d'entrée optique du système d'émission-réception pour le faisceau laser reçu.

Un terminal conforme à l'invention est caractérisé en ce qu'il comprend en outre une unité de contrôle de poursuite, qui est agencée pour commander des rotations des moteurs du système de pointage lors de l'étape de poursuite, à partir des signaux représentatifs de la déviation du faisceau laser reçu. Cette commande de rotation des moteurs est réalisée en utilisant une boucle simple d'asservissement, de sorte que les rotations des moteurs annulent sensiblement la déviation du faisceau laser qui est reçu par rapport à la direction de référence.

Ainsi, dans un terminal selon l'invention, la déviation de la direction des signaux laser qui sont reçus, par rapport à la direction de référence, est compensée directement par les rotations des moteurs du système de pointage unique. Autrement dit, le système de pointage qui est utilisé est du type CPM, puisqu'il utilise des moteurs pour varier l'orientation du champ d'entrée du système d'émission-réception. Mais, les rotations de ces moteurs sont asservies en fonction de la déviation qui est mesurée, entre la direction de réception des signaux laser et la direction de référence. De cette façon, le pointage du terminal pendant l'étape de poursuite est réalisé avec une simple boucle d'asservissement. Dans toute la suite, on entend par annuler sensiblement la déviation l'effet de réduction de cette déviation qui résulte de la commande par asservissement, étant entendu que l'annulation réelle qui est obtenue peut n'être qu'approchée compte tenu de variations de la direction de référence et de perturbations qui peuvent intervenir pendant la variation du champ d'entrée du système d'émission-réception.

Ainsi, un terminal de communication optique selon l'invention peut être dépourvu de système de pointage fin. En ce sens, il comprend un système de pointage dit unique, qui comprend les moteurs d'orientation du champ d'entrée optique, ainsi que le système de commande de ces moteurs.

En outre, les rotations des moteurs sont contrôlées directement par l'unité de contrôle de poursuite en fonction de la déviation qui est mesurée. Par conséquent, le contrôle de poursuite ne nécessite pas que les positions de rotation des moteurs soient détectées en elles-mêmes.

Grâce à la suppression du système de pointage fin et celle des détections des positions de rotation des moteurs, l'unité de contrôle de poursuite peut être particulièrement simple.

Il est entendu que le système de pointage peut varier l'orientation du champ d'entrée optique du système d'émission-réception de plusieurs façons. Il peut varier l'orientation du système d'émission-réception lui-même, lorsque ce dernier est agencé sur une partie mobile du système de pointage. D'une façon équivalente, le système d'émission-réception peut être fixe et le système de pointage peut varier l'orientation d'un miroir de déflexion qui est disposé devant l'entrée optique du système d'émission-réception.

Un terminal selon l'invention est particulièrement approprié lorsque l'exigence de précision du pointage n'est pas trop élevée. Ce peut être le cas, notamment, lorsque le faisceau laser qui est produit par le terminal pour émettre des signaux présente une certaine divergence. Dans ce cas, la précision du pointage inférieure à 20 $\mu$rad (microradian) peut être suffisante. De telles conditions d'émission sont possibles, en particulier, lorsque le terminal transmet des données avec un débit qui est relativement faible.

Un terminal selon l'invention peut être utilisé, notamment, à bord d'un satellite géostationnaire.

Dans un mode de réalisation d'un terminal selon l'invention, l'unité de contrôle de poursuite peut comprendre un filtre de fréquence passe-bas, qui est disposé pour recevoir les signaux représentatifs de la déviation du faisceau laser reçu par rapport à la direction de référence, et pour produire des signaux de déviation filtrés. L'unité de contrôle de poursuite est alors agencée de sorte que les rotations des moteurs du système de pointage soient commandées en fonction des signaux de déviation filtrés. Autrement dit, l'unité de poursuite comprend aussi un régulateur qui est monté en sortie du filtre de fréquence passe-bas. Ce régulateur reçoit en entrée les signaux de déviation filtrés, et produit à partir de ceux-ci la consigne de rotation des moteurs. Pour cela, le filtre passe-bas est adapté de sorte qu'en boucle fermée, les perturbations qui affectent l'orientation du champ d'entrée du système d'émission-réception et qui ont des fréquences inférieures à 0,1 Hertz, soient rejetées avec une réjection supérieure ou égale à 60 dB (décibel) en valeur absolue. Autrement dit, les signaux représentatifs de la déviation du faisceau laser reçu présentent, en boucle fermée d'asservissement, une atténuation supérieure ou égale à 60 dB en valeur absolue des perturbations affectant l'orientation du champ d'entrée du système d'émission-réception et ayant des fréquences inférieures à 0,1 Hertz.

Dans le cadre de la présente invention, on appelle réjection d'une perturbation le quotient entre l'amplitude $D_{bf}(f_o)$ d'une composante fréquentielle de la déviation résiduelle en boucle fermée, c'est-à-dire lorsque l'asservissement est actif, qui est générée par la perturbation d'une part, et l'amplitude $P(f_o)$ de la composante fréquentielle de la perturbation elle-même d'autre part, pour la même fréquence $f_o$. La réjection, exprimée en décibel, est ainsi donnée par la relation suivante :

$$Re\,j(\,f_o\,) = 20 \cdot log_{10}\left(\frac{D_{bf}(\,f_o\,)}{P(\,f_o\,)}\right) \qquad (1)$$

Un tel filtrage est efficace pour supprimer ou compenser des perturbations qui proviennent du système de pointage lui-même, notamment du fonctionnement des moteurs ou des paliers de roulement de celui-ci. De telles perturbations peuvent être dues, par exemple, à un retard d'inversion qui apparaît lors d'un changement du sens de rotation d'un moteur, à des à-coups d'un couple moteur qui est produit, formant un «couple de crantage» («cogging torque» en anglais), etc.

La compensation des perturbations est encore plus efficace lorsque la réjection est supérieure ou égale à 65 dB, de préférence supérieure ou égale à 75 dB, en valeur absolue pour les perturbations qui affectent l'orientation du champ d'entrée du système d'émission-réception et qui ont des fréquences inférieures à 0,1 Hertz.

En particulier, le filtre passe-bas peut être un filtre de second ordre, ou d'un ordre qui est supérieur à deux. Un tel filtre, lorsqu'il est introduit dans la boucle de contrôle du pointage de poursuite, produit une coupure de réjection qui est assez franche pour les perturbations de basses fréquences, i.e. pour des fréquences inférieures à 1 Hertz.

Selon un perfectionnement de l'invention, le régulateur de l'unité de contrôle de poursuite peut être un régulateur proportionnel-intégral, qui est pourvu d'au moins un filtre d'avance de phase, et disposé pour recevoir en entrée les signaux de déviation filtrés. Un tel filtre d'avance de phase contribue à améliorer la stabilité du pointage, tel qu'il est produit par la boucle d'asservissement.

Dans un mode de réalisation d'un terminal selon l'invention, l'unité de contrôle de poursuite peut comprendre elle-même :

- un régulateur, qui est adapté pour produire une consigne de régulation à partir des signaux représentatifs de la déviation du faisceau laser reçu par rapport à la direction de référence, de sorte que des rotations fictives des moteurs qui seraient commandées conformément à cette consigne de régulation annuleraient la déviation ;

- une unité d'évaluation, qui est adaptée pour évaluer au moins une perturbation de la variation du champ d'entrée du système d'émission-réception qui résulterait des rotations fictives des moteurs, et pour produire une consigne de compensation de ladite perturbation ; et

- un sommateur, qui est disposé pour recevoir en entrée la consigne de régulation et la consigne de compensation, et adapté pour produire une consigne de rotation pour commander les moteurs du système de pointage, la consigne de rotation étant égale à la somme de la consigne de régulation et de la consigne de compensation.

Dans ce mode de réalisation de l'invention, les perturbations qui sont provoquées par une activation du système de pointage sont déterminées avant que le système de pointage soit activé, et prises en compte dans la consigne de rotation qui est transmises aux moteurs. Les perturbations qui sont considérées dans ce second mode de réalisation de l'invention peuvent être, de façon non-limitative, des frottements solides des moteurs ou des paliers de roulements, des couples de crantage des moteurs, des jeux d'entraînements mécaniques, etc.

Pour cela, l'unité d'évaluation de perturbation peut incorporer une table de lecture («look-up table» en anglais) enregistrée à entrées multiples, qui est adaptée pour fournir une valeur de la consigne de compensation pour des valeurs respectives des entrées de cette table. Alternativement, l'unité d'évaluation de perturbation peut être adaptée pour calculer une valeur de la consigne de compensation en fonction de valeurs respectives d'entrées, en utilisant un algorithme. Dans chaque cas, les entrées de l'unité d'évaluation de perturbation peuvent être sélectionnées dans un ensemble qui comprend la consigne de régulation, la direction de référence, une température et au moins une vitesse de variation du système de pointage.

Selon un deuxième aspect de l'invention, celle-ci propose aussi un relais de communication qui est adapté pour être embarqué à bord d'un satellite géostationnaire, afin de relayer des communications entre un terminal d'utilisateur externe au relais et une station terrestre. Le relais comprend :

- un premier terminal de communication optique qui est conforme au premier aspect de l'invention, et qui est destiné à échanger des premiers signaux de communication avec le terminal d'utilisateur, ces premiers signaux de communication étant des signaux laser ;

- un second terminal de communication, qui est adapté pour échanger des seconds signaux de communication avec la station terrestre ; et

- une unité de transfert de signaux de communication, qui est agencée pour convertir des premiers signaux de communication reçus par le premier terminal en seconds signaux destinés à être transmis par le second terminal, et pour convertir des seconds signaux de communication reçus par le second terminal en premiers signaux destinés à être transmis par le premier terminal.

Selon un troisième aspect de l'invention, celle-ci propose enfin un procédé d'orientation d'un champ d'entrée optique d'un système d'émission-réception de signaux laser lors d'une étape de poursuite, le système d'émission-réception comprenant une matrice de photodétecteurs qui est agencée pour détecter un faisceau laser reçu, le procédé comprenant les étapes suivantes :

/1/ fournir un système de pointage, qui comprend au moins deux moteurs agencés pour varier l'orientation du champ d'entrée du système d'émission-réception selon deux directions de rotation distinctes ;

/2/ recueillir au moins deux signaux représentatifs d'une déviation du faisceau laser reçu par rapport à une direction de référence ; et

/3/ commander des rotations des moteurs du système de pointage à partir des signaux représentatifs de la déviation du faisceau laser reçu, par une boucle simple d'asservissement de sorte que les rotations des moteurs annulent sensiblement la déviation du faisceau laser reçu par rapport à la direction de référence.

Un tel procédé de pointage procède par une boucle d'asservissement simple, et peut être mis en oeuvre en utilisant un terminal de communication optique conforme au premier aspect de l'invention.
Conformément au premier mode de réalisation d'un terminal selon l'invention, cité plus haut, le procédé peut comprendre en outre l'étape suivante, effectuée entre les étapes /2/ et /3/ :

- filtrer les signaux représentatifs de la déviation du faisceau laser reçu, en utilisant un filtre de fréquence passe-bas, de façon à produire des signaux de déviation filtrés.

Les rotations des moteurs du système de pointage sont alors commandées à l'étape /3/ en fonction des signaux de déviation filtrés.
Dans ce cas, le filtre passe-bas peut être sélectionné de sorte que les signaux représentatifs de la déviation du faisceau laser reçu présentent après filtrage en boucle fermée d'asservissement, une réjection qui est supérieure ou égale à 60 dB en valeur absolue par rapport à des perturbations qui affectent l'orientation du champ d'entrée du système d'émission-réception et qui ont des fréquences inférieures à 0,1 Hertz.
Conformément au second mode de réalisation d'un terminal selon l'invention, l'étape /2/ peut comprendre les sous-étapes suivantes :

/2-1/ déterminer une consigne de régulation à partir des signaux représentatifs de la déviation du faisceau laser reçu par rapport à la direction de référence, de sorte que des rotations fictives des moteurs du système de pointage qui correspondent à cette consigne de régulation annuleraient cette déviation ;

/2-2/ évaluer au moins une perturbation de la variation du champ d'entrée du système d'émission-réception qui résulterait de ces rotations fictives des moteurs du système de pointage, et déterminer une consigne de compensation de la perturbation évaluée ; et

/2-3/ produire une consigne de rotation à partir d'un résultat d'une addition de la consigne de régulation et de la consigne de compensation.

Les rotations des moteurs du système de pointage sont alors commandées à l'étape /3/ en utilisant la consigne de rotation produite à la sous-étape /2-3/.
Selon deux possibilités alternatives, la perturbation peut être évaluée à l'étape /2-2/ en utilisant une table de lecture ou un algorithme de calcul à entrées multiples. Les entrées de la table ou de l'algorithme peuvent être sélectionnées dans un ensemble qui comprend la consigne de régulation, la direction de référence, une température et au moins une vitesse de variation du système de pointage.

D'autres particularités et avantages de la présente invention apparaîtront dans la description ci-après d'un exemple de réalisation non limitatif, en référence aux dessins annexés, dans lesquels :

- la figure 1a, déjà décrite, est un schéma synoptique d'un terminal de communication optique selon l'art antérieur ;

- la figure 1b, déjà décrite, est un diagramme logique de commande de pointage pour le terminal de la figure 1a, conformément à l'art antérieur ;

- la figure 2 illustre une application d'un terminal de communication optique selon l'invention ;

- la figure 3 est un schéma synoptique d'un terminal de communication optique selon l'invention ;

- la figure 4a est un diagramme logique de commande de pointage pour le terminal de communication optique de la figure 3a, conformément à un premier mode de réalisation de l'invention ;

- la figure 4b est un diagramme de filtrage de perturbations, en boucle fermée, pour un terminal de communication optique conforme à la figure 4a ; et

- la figure 5 correspond à la figure 4a pour un second mode de réalisation de l'invention.

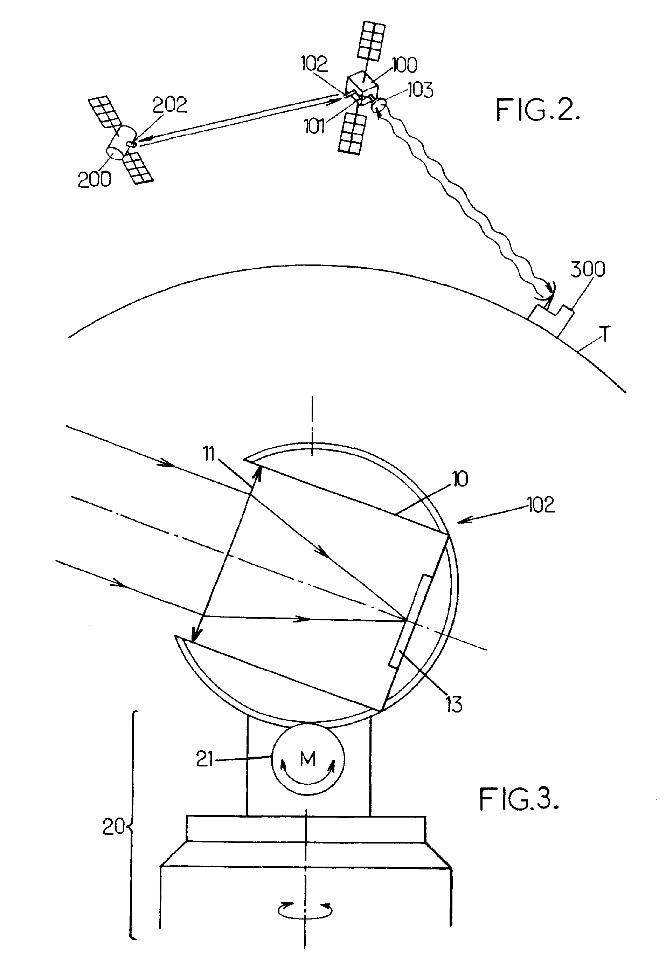

Conformément à la figure 2, un satellite géostationnaire 100 peut être dédié à la retransmission de données entre un satellite à basse altitude ou un aéronef 200 et une station terrestre 300. T désigne la Terre. Pour cela, un relais de communication est embarqué à bord du satellite géostationnaire 100, qui permet d'établir une première communication avec le satellite de basse altitude ou aéronef 200 d'une part, et une seconde communication avec la station terrestre 300 d'autre part. Le relais a pour fonction de recevoir des signaux qui sont transmis par le satellite ou aéronef 200, de les convertir en signaux destinés à la station 300 et de transmettre ces derniers. Inversement, il a aussi pour fonction de recevoir des signaux qui sont transmis par la station 300, de les convertir en signaux destinés au satellite ou aéronef 200, et de les transmettre à celui-ci.

Le relais de communication comprend un premier terminal de communication 102 qui est adapté pour établir une liaison de communication avec un terminal d'utilisateur 202 embarqué à bord du satellite de basse altitude ou de l'aéronef 200. Il comprend aussi un second terminal de communication 103 qui est adapté pour établir une liaison de communication avec la station terrestre 300, et une unité 101 de transfert des signaux entre les deux terminaux 102 et 103.

La liaison de communication entre le satellite géostationnaire 100 et la station terrestre 300 peut être du type optique ou hertzien.

La liaison de communication entre le satellite géostationnaire 100 et le satellite de basse altitude ou l'aéronef 200 est du type optique à transmission laser. Dans ce cas, les données sont échangées entre les terminaux 102 et 202 sous la forme de faisceaux laser modulés. La longueur d'onde des faisceaux laser produits par les terminaux 102 et 202 peut être 0,8 $\mu$m (micromètre), 1,06 $\mu$m ou 1,55 $\mu$m, par exemple.

La liaison de communication du terminal d'utilisateur 202 vers le terminal 102 est appelée liaison montante, et la liaison de communication du terminal 102 vers le terminal d'utilisateur 202 est appelée liaison descendante. En général, le débit de transmission de la liaison montante est supérieur à celui de la liaison descendante. C'est le cas, notamment, lorsque le satellite de basse altitude ou l'aéronef 200 est dédié à l'observation terrestre, et que des données d'images sont transmises à la station 300 via le satellite géostationnaire 100. Il est alors nécessaire que le terminal 102 collecte une proportion suffisante de l'énergie des signaux qui sont transmis par le terminal d'utilisateur 202. Pour cette raison, le faisceau laser de la liaison montante, qui est produit par le terminal 202, doit être peu divergent. A l'inverse, le débit de la liaison descendante étant faible en général, le faisceau laser qui est produit par le terminal 102 peut être plus divergent. Dans ces conditions, le pointage du terminal 102 en direction du terminal d'utilisateur 202 peut avoir une précision moins contraignante. En particulier, cette précision peut être de l'ordre de ou supérieure à 10 $\mu$rad (microradian) environ, au lieu d'être de l'ordre de 1 $\mu$rad pour la liaison montante.

Le terminal 102, conforme à la présente invention, peut alors avoir une structure telle qu'illustrée par la figure 3. Sur celle-ci, les références qui sont reprises de la figure 1a désignent des composants identiques, ou qui ont des fonctions identiques. Essentiellement, le terminal 102 est dépourvu de système de pointage fin. Le champ d'entrée du système d'émission-réception 10 est donc fixe par rapport à la matrice de photodétecteurs 13.

Bien que, pour raison de clarté, la présente description ne mentionne dans la suite qu'un seul moteur et qu'un seul signal représentatif de la déviation entre la direction du faisceau laser qui est reçu par le terminal 102 et la direction de référence, l'Homme du métier comprendra que les éléments correspondants de l'invention doivent être reproduits pour deux axes de rotation indépendants, de façon à assurer une poursuite du terminal d'utilisateur 202 quelque soient les trajectoires relatives des deux satellites 100 et 200. En particulier, les signaux représentatifs de la déviation peuvent correspondre à deux composantes de cette déviation, parallèlement à deux directions perpendiculaires sur la matrice de photodétecteurs 13.

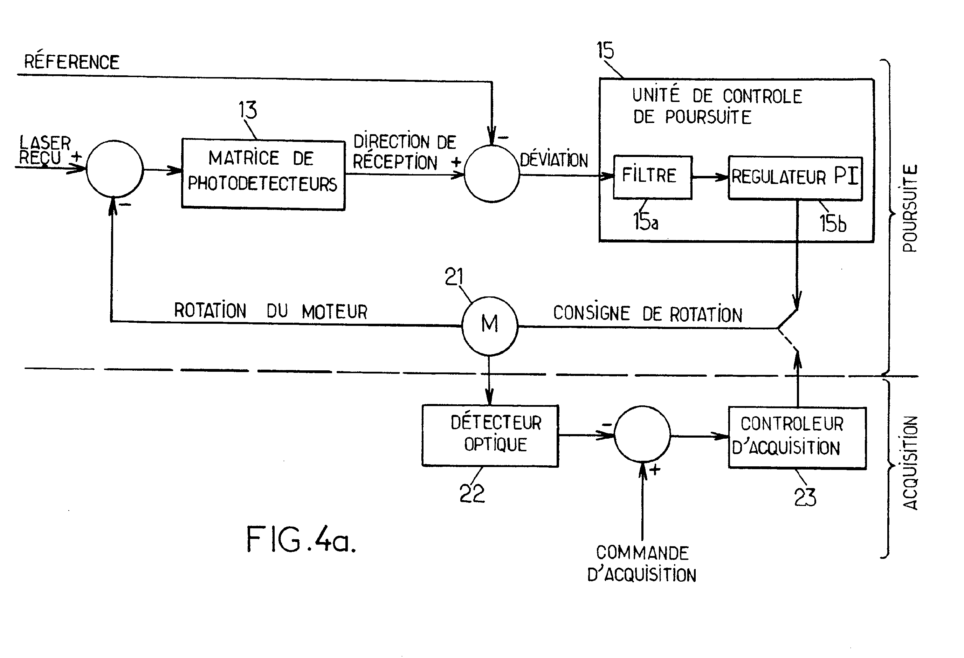

On décrit maintenant le fonctionnement du pointage du terminal 102 pendant l'étape de poursuite pour un premier mode de réalisation de l'invention, en référence à la partie supérieure de la figure 4a.

Selon l'invention, le pointage de poursuite est obtenu par une simple boucle d'asservissement qui comprend la matrice de photodétecteurs 13, une unité de contrôle de poursuite 15 et le moteur 21. L'unité de contrôle 15 produit une consigne de rotation du moteur 21 à partir d'un signal représentatif de la déviation de la direction du faisceau laser reçu par rapport à la direction de référence. La détermination de cette déviation peut être réalisée d'une façon qui est connue en soi avant la présente invention. En particulier, la direction de référence est déterminée en prenant en compte le pointage-avant et l'écart intrinsèque au système d'émission-réception, entre la direction d'émission du terminal d'une part et sa direction de réception d'autre part. La consigne de rotation est transmise au moteur 21, et la rotation du moteur 21 assure une compensation de la déviation entre les directions de réception et de référence. Un tel mode de commande est donc à une seule boucle d'asservissement, dite simple boucle d'asservissement.

En outre, aucun mécanisme de pointage fin, à miroir orientable, n'est utilisé.

Dans un tel contrôle de la direction de pointage, d'éventuels écarts entre la rotation réelle du moteur 21 et la consigne de rotation qui est produite par l'unité 15, sont pris en compte par leurs contributions à la déviation qui est mesurée entre la direction du signal laser qui est reçu et la direction de référence. Pour cette raison, il n'est pas nécessaire que la rotation du moteur 21 soit repérée par elle-même, par exemple en utilisant le détecteur angulaire 22. Ainsi, le détecteur 22 n'est pas utilisé pendant l'étape de poursuite.

Pour obtenir une précision du pointage qui est inférieure à 20 $\mu$rad avec un tel fonctionnement de poursuite, l'unité 15 peut comprendre un filtre fréquentiel 15a. Le filtre 15a peut être disposé en entrée de l'unité 15, à l'intérieur de celle-ci, par rapport à un régulateur 15b qui produit la consigne de rotation du moteur 21. Ainsi, le filtre 15a réalise un filtrage du signal représentatif de la déviation qui existe entre la direction de réception et celle de référence. La consigne de rotation du moteur 21, en poursuite, est alors produite par le régulateur 15b à partir du signal représentatif de la déviation filtré.

Le filtre 15a est du type passe-bas, de sorte qu'il augmente, entre son entrée et sa sortie, les composantes du signal de déviation qui ont des fréquences inférieures à une fréquence de seuil fixée. Cette augmentation est relative, par rapport à des composantes du signal dont les fréquences respectives sont supérieures à la fréquence de seuil. Autrement dit, les composantes à basse fréquence ont des amplitudes qui sont augmentées, comparativement, dans le signal filtré qui est transmis au régulateur 15b. Elles sont alors plus compensées par le contrôle du pointage en boucle fermée d'asservissement. Le pointage qui est obtenu, et qui peut être caractérisé par le signal représentatif de la déviation entre la direction de réception et celle de référence, présente donc, grâce au filtre fréquentiel 15a, une réjection accrue des perturbations à basse fréquence qui affectent l'orientation du champ d'entrée du système d'émission-réception 10.

Les inventeurs ont déterminé qu'une réjection qui est supérieure ou égale à 60 dB en valeur absolue, pour des fréquences qui sont inférieures à 0,1 Hz (Hertz), est adaptée pour compenser des perturbations causées par des défauts de fonctionnement du système de pointage 20, notamment du moteur 21. Notamment, des retards lors d'une inversion du sens de rotation de l'un des moteurs, les couples de crantage, des jeux d'entraînement ou encore des frottements solides qui interviennent dans le fonctionnement du système 20 sont ainsi compensés. Une précision de pointage qui est inférieure à 10 $\mu$rad est obtenue de cette façon pour les variations suivantes de la direction de référence :

- une première variation sinusoïdale, avec une vitesse angulaire maximale de 0,01 °/s (degré par seconde) et une période de variation de 100 s (seconde), et

- une seconde variation qui comprend un changement de sens suivi par une accélération pendant 100 s, pour atteindre une vitesse de variation du pointage de 0,10 °/s.

Un tel fonctionnement satisfaisant est notamment obtenu lorsque le filtre 15a est un filtre passe-bas d'ordre 2, qui possède une fonction de transfert $K_{Lp}$ du type caractérisé par la relation suivante :

$$K_{LP}(s) = \frac{s^2 + 2z_1 \cdot \omega_1 \cdot s + \omega_1^2}{s^2 + 2z_2 \cdot \omega_2 \cdot s + \omega_2^2} \qquad (2)$$

où s est la variable de Laplace, $\omega_1$ et $\omega_2$ sont deux pulsations de coupure, et $z_1$ et $z_2$ sont deux coefficients d'amortissement. Un tel mode de caractérisation du filtre est supposé bien connu de l'Homme du métier. En particulier, la variable de Laplace s est égale à la fréquence $f_o$ de la composante de perturbation considérée, multipliée

par $2\pi$ et par la racine-carrée complexe de -1.

En outre, $\omega_1$ peut être comprise entre $2\pi$ rad/s (radian par seconde) et 15 x $2\pi$ rad/s, et $\omega_2$ peut être comprise entre 0,01 x $2\pi$ rad/s et $2\pi$ rad/s. Dans ces conditions, la valeur asymptotique du gain en décibels du filtre 15a à basse fréquence est supérieure à 20 x $\log_{10}(\omega_2^2/\omega_1^2)$ = 40 x $\log_{10}(\omega_2/\omega_1)$. Par exemple, lorsque $\omega_1$ est égale à 5 x $2\pi$ rad/s et $\omega_1$ est égale à 0,1 x $2\pi$ rad/s, la valeur asymptotique du gain à basse fréquence est d'environ 68 dB, ce qui est cohérent avec une réjection d'au moins 60 dB à 0,1 Hz.

Les coefficients d'amortissement $z_1$ et $z_2$ sont choisis pour ne pas perturber la stabilité du régulateur 15b. Ils peuvent être chacun compris entre 0,1 et 0,7. Des valeurs préférées sont $z_1$ = 0,2 et $z_2$ = 0,5.

Le régulateur 15b peut être du type proportionnel-intégral, noté PI sur la figure. Il peut comprendre en outre au moins un, par exemple deux, filtres d'avance de phase. Dans ce cas, la fonction de transfert globale de l'unité 15 peut être du type donné par la relation suivante :

$$K(s) = K_{LP}(s) \times \left( K_p + \frac{K_i}{s} \right) \times K_1(s) \times K_2(s) \qquad (3)$$

où K désigne la fonction transfert globale de l'unité 15, $K_p$ et $K_i$ sont respectivement les constantes de proportionnalité et d'intégration de la régulation produite par le régulateur 15b, et $K_i$ et $K_2$ sont les fonctions de transfert des deux filtres d'avance de phase. Notamment, $K_1$ et $K_2$ peuvent être chacun du type suivant :

$$K_{1,2}(s) = \frac{1 + a \cdot \tau \cdot s}{1 + \tau \cdot s} \qquad (4)$$

où a et $\tau$ sont les paramètres de chaque filtre d'avance de phase. a et $\tau$ sont ajustés pour que chaque filtre d'avance de phase ait un effet pour des fréquences qui sont comprises entre 10 et 50 Hz, afin de stabiliser l'ensemble de la boucle de contrôle du pointage. Par exemple, a et $\tau$ peuvent être sélectionnés pour que chaque filtre d'avance de phase réalise un déphasage positif qui est compris entre 30 et 60 degrés, voire entre 40 et 60 degrés à la fréquence de coupure du régulateur proportionnel-intégral 15b.

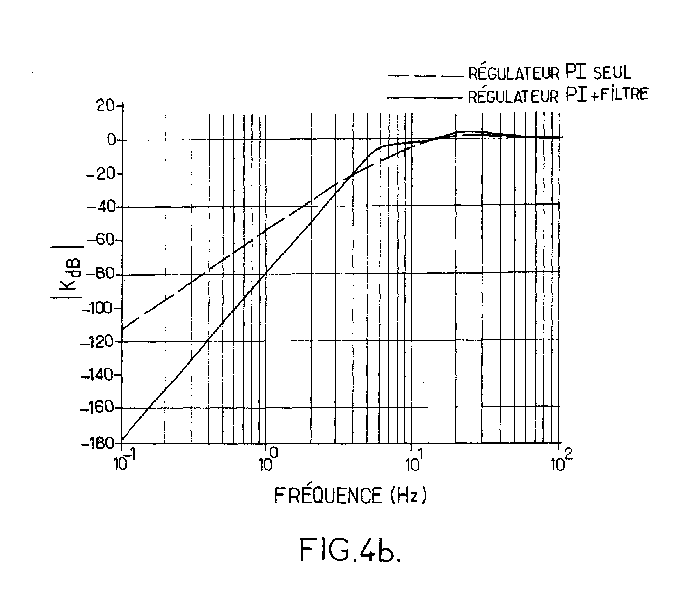

La figure 4b est un diagramme de Bode qui compare les modules des gains en boucle fermée, respectivement pour le régulateur proportionnel-intégral 15b seul (courbe en traits interrompus) et pour une unité de contrôle de poursuite 15 conforme aux relations 2 à 4 (courbe en trait continu). Le régulateur 15b présente lui-même une fréquence de coupure en boucle fermée qui est sensiblement égale à 15 Hz. Pour la courbe correspondant à l'adjonction du filtre 15a (courbe en trait continu), les pulsations de coupure $\omega_1$ et $\omega_2$ sont respectivement égales à 5 x $2\pi$ rad/s et 0.1 x $2\pi$ rad/s. $z_1$ et $z_2$ sont respectivement égaux à 0,2 et 0,5. Dans ces conditions, le gain pour la fréquence de 1 Hz passe d'une valeur qui est environ égale à -53 dB pour le régulateur 15b seul, à une valeur qui est environ égale à -78 dB avec le filtre 15a. Pour la fréquence de 0,1 Hz, le gain passe de -112 dB à -178 dB, soit un gain de 66 dB qui correspond à la caractéristique d'une réjection supérieure à 60 dB. Cette augmentation de la réjection, qui apparaît dès 4 Hz et augmente jusqu'à en deçà de 0,1 Hz, assure que la boucle d'asservissement compense efficacement les perturbations qui appartiennent à cet intervalle fréquentiel, et en particulier celles qui sont liées au fonctionnement du système de pointage 20 lui-même, notamment de ses moteurs.

Conformément à la partie inférieure de la figure 4a, le contrôle de la direction de pointage pendant une phase d'acquisition peut être identique à celui connu avant la présente invention, et qui a été rappelé plus haut.

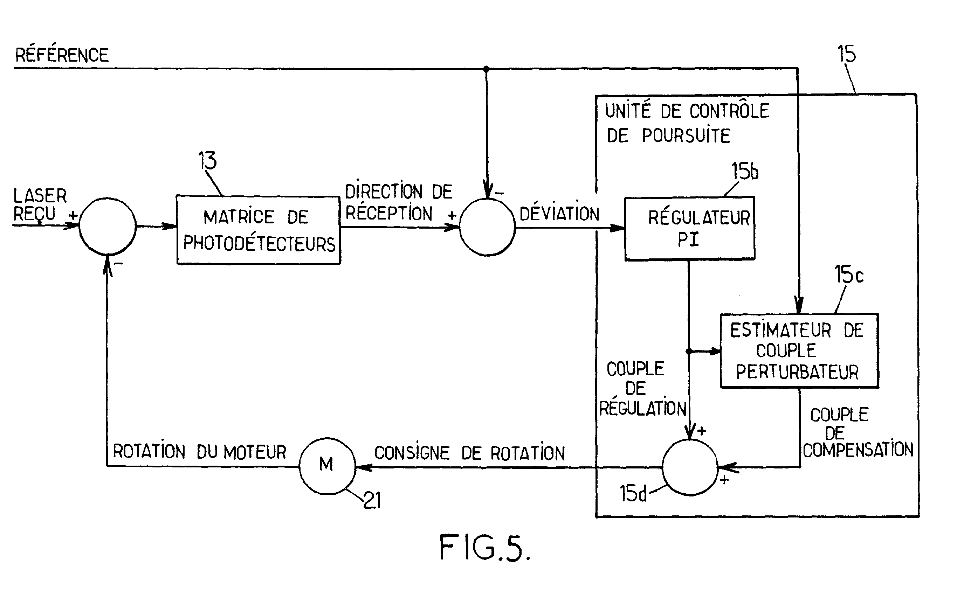

La figure 5, en relation avec la figure 3, illustre le fonctionnement du pointage du terminal 102 pendant l'étape de poursuite pour un second mode de réalisation de l'invention.

Ce second mode de réalisation est basé sur une connaissance préalable des couples perturbateurs qui sont générés par le système de pointage 20 lui-même. Ces couples perturbateurs sont évalués a priori et compensés sur la base de cette évaluation lors de la commande de rotation des moteurs.

Pour cela, les couples perturbateurs du système de pointage 20, qui peuvent résulter notamment des fonctionnements des moteurs ou des guidages par roulements à billes, sont préalablement caractérisés de façon expérimentale ou par modélisation numérique. Lors d'une caractérisation expérimentale qui a été effectuée par les inventeurs, les frottements qui se produisent dans les roulements à billes ont été identifiés comme étant la cause principale d'erreur de pointage.

La compensation des couples perturbateurs est obtenue en ajoutant à la boucle simple d'asservissement du pointage qui a déjà été décrite (matrice des photodétecteurs 13, unité de contrôle de poursuite 15 et moteur 21) une unité d'évaluation des couples perturbateurs qui sont provoqués par les rotations du système 20. Le régulateur 15b de l'unité de contrôle de poursuite 15 peut être du type proportionnel-intégral usuel. Il produit une consigne de couple de régulation à partir de la valeur qui est déterminée pour la déviation entre la direction de réception et la direction de référence.

L'unité d'évaluation des couples perturbateurs est référencée 15c sur la figure 5, et désignée par estimateur. Elle peut incorporer une table à entrées multiples qui est enregistrée, et dont la lecture fournit une valeur du couple perturbateur. Les entrées de la table peuvent comprendre, notamment, le couple de régulation qui est déterminé par le régulateur 15b, la direction de référence, une température de fonctionnement du système de pointage 20, une ou plusieurs vitesses de variation du système 20, etc. Alternativement, l'unité d'évaluation 15c peut incorporer un calculateur qui calcule le couple perturbateur en fonction des mêmes données d'entrée, en utilisant une équation empirique.

Un couple de compensation, opposé au couple perturbateur qui est ainsi évalué, est alors additionné au couple de régulation qui est déterminé par le régulateur 15b pour obtenir la consigne de rotation du moteur 21. Cette addition est effectuée par le sommateur 15d.

Le régulateur 15b, l'unité d'estimation 15c et le sommateur 15d peuvent être regroupés dans l'unité de contrôle de poursuite 15.

Il existe un grand nombre d'algorithmes d'évaluation de frottements, qui sont connus par l'Homme du métier ou disponibles pour lui. Le choix de l'un de ces algorithmes est effectué en fonction de caractéristiques mécaniques du système 20. En particulier, les inventeurs ont utilisé le modèle de frottements solides qui est décrit dans l'article « Linear Space-Invariant Control as an Alternative to Discontinuous Switching Controller » de C. Canudas de Wit, Proceedings of the 6th IEEE VSS, Goal Coast, Australia, 7-9 Dec. 2000, pp 135-146. D'après ce modèle, la consigne de couple u qui est transmise au moteur 21 est donnée par les équations suivantes :

$$u = H(s) \cdot e + k_{vss}(\zeta + \beta \cdot \dot{\zeta}) \qquad (5)$$

$$\varepsilon \cdot \dot{\zeta} = e - |e| \cdot \zeta \qquad (6)$$

où s désigne encore la variable de Laplace, H(s) est la fonction de transfert du régulateur 15b, e est le signal d'entrée du régulateur 15b, c'est-à-dire la déviation indiquée sur la Figure 5, $\zeta$ et $\dot{\zeta}$ désignent respectivement la variable interne de l'estimateur et sa dérivée par rapport au temps, $\varepsilon$ et $\beta$ sont des constantes et $k_{vss}$ est un paramètre supérieur à la valeur maximale du couple de frottement évalué. Avec les valeurs suivantes : $k_{vss}$=1,3 x $F_{max}$, $F_{max}$ = 0,05 Nm (newton x mètre), $\varepsilon$ = 0,1 x $k_{vss}$/Ki, Ki étant le gain intégral du régulateur 15b, égal à $1,1.10^4$ pour la mise en oeuvre concernée, et $\beta$ = 0, les inventeurs ont obtenu une précision du pointage qui est inférieure à 20 $\mu$rad lors d'un fonctionnement de poursuite.

Il est entendu que les réalisations de l'invention qui viennent d'être décrites en détail peuvent être adaptées pour des mises en oeuvre ou des applications différentes.

En particulier, l'Homme du métier pourra ajuster le filtre passe-bas 15a, notamment son ordre et ses paramètres de coupure et d'amortissement, de différentes façons pour obtenir une réjection adaptée en boucle fermée. Toutefois, les caractéristiques numériques de réjection qui ont été données dans la présente description assurent que les perturbations produites par le fonctionnement du système de pointage sont compensées de façon satisfaisante.

De même, ces perturbations produites par le fonctionnement du système de pointage peuvent être compensées de plusieurs façons qui sont équivalentes à celle décrite en relation avec la figure 5.

Enfin, la variation du champ d'entrée optique du système d'émission-réception 10 peut être obtenue aussi bien en disposant ce système 10 sur la partie mobile du système de pointage 20, qu'en disposant sur cette partie mobile un miroir de déflexion situé devant l'entrée optique du système 10.

**Revendications**

1. Terminal de communication optique (102), adapté pour réaliser des communications par modulation de faisceau laser avec au moins un autre terminal distant (202) situé à une distance de communication supérieure à 10 000 km, avec une précision de pointage comprise entre 2 et 20 $\mu$rad, ledit terminal (102) comprenant :

- un système d'émission-réception de signaux laser (10), comprenant lui-même une matrice de photodétecteurs (13) agencée pour détecter un faisceau laser reçu, produit par ledit terminal distant (202), et adapté pour produire, lors d'une étape de poursuite, au moins deux signaux représentatifs d'une déviation du faisceau laser reçu par rapport à une direction de référence ; et
- un système de pointage unique (20), comprenant lui-même au moins deux moteurs (21) agencés pour varier selon deux directions de rotation distinctes, une orientation d'un champ d'entrée optique du système d'émission-réception pour le faisceau laser reçu,

et étant **caractérisé en ce que** le terminal (102) comprend en outre une unité de contrôle de poursuite (15) agencée pour commander des rotations des moteurs (21) du système de pointage lors de l'étape de poursuite, à partir des signaux représentatifs de la déviation du faisceau laser reçu, par une boucle simple d'asservissement de sorte que lesdites rotations des moteurs annulent sensiblement ladite déviation du faisceau laser reçu par rapport à la direction de référence.
et **en ce que** l'unité de contrôle de poursuite (15) comprend elle-même :

- un régulateur (15b), adapté pour produire une consigne de régulation à partir des signaux représentatifs de la déviation du faisceau laser reçu par rapport à la direction de référence, de sorte que des rotations fictives des moteurs (21) commandées conformément à ladite consigne de régulation annuleraient ladite déviation ;
- une unité d'évaluation (15c), adaptée pour évaluer au moins une perturbation de la variation du champ d'entrée du système d'émission-réception (10) résultant des dites rotations fictives des moteurs, et pour produire une consigne de compensation de ladite perturbation ; et
- un sommateur (15d), disposé pour recevoir en entrée la consigne de régulation et la consigne de compensation, et adapté pour produire une consigne de rotation pour commander les moteurs (21) du système de pointage, ladite consigne de rotation étant égale à la somme de ladite consigne de régulation et de ladite consigne de compensation.

2. Terminal selon la revendication 1, dans lequel l'unité d'évaluation (15c) incorpore une table de lecture enregistrée à entrées multiples, adaptée pour fournir une valeur de la consigne de compensation pour des valeurs respectives des entrées de ladite table, lesdites entrées étant sélectionnées dans un ensemble comprenant la consigne de régulation, la direction de référence, une température et au moins une vitesse de variation du système de pointage.

3. Terminal selon la revendication 1, dans lequel l'unité d'évaluation (15c) est adaptée pour calculer une valeur de la consigne de compensation en fonction de valeurs respectives d'entrées sélectionnées dans un ensemble comprenant la consigne de régulation, la direction de référence, une température et au moins une vitesse de variation du système de pointage.

4. Utilisation d'un terminal de communication optique selon l'une quelconque des revendications précédentes, à bord d'un satellite géostationnaire (100).

5. Relais de communication adapté pour être embarqué à bord d'un satellite géostationnaire (100), pour relayer des communications entre un terminal d'utilisateur (202) externe au relais et une station terrestre (300), ledit relais comprenant :

- un premier terminal de communication optique (102), destiné à échanger des premiers signaux de communication avec le terminal d'utilisateur (202), lesdits premiers signaux de communication étant des signaux laser ;
- un second terminal de communication (103), adapté pour échanger des seconds signaux de communication avec la station terrestre (300) ; et
- une unité de transfert de signaux de communication (101), agencée pour convertir des premiers signaux de communication reçus par le premier terminal en seconds signaux transmis par le second terminal, et pour convertir des seconds signaux de communication reçus par le second terminal en premiers signaux transmis par le premier terminal,

le relais étant **caractérisé en ce que** ledit premier terminal de communication optique (102) est conforme à l'une quelconque des revendications 1 à 3.

6. Procédé d'orientation d'un champ d'entrée optique d'un système d'émission-réception de signaux laser lors d'une étape de poursuite, ledit système d'émission-réception (10) comprenant une matrice de photodétecteurs (13) agencée pour détecter un faisceau laser reçu, ledit procédé comprenant les étapes suivantes :

/1/ fournir un système de pointage (20), comprenant au moins deux moteurs (21) agencés pour varier l'orientation du champ d'entrée du système d'émission-réception selon deux directions de rotation distinctes ;

/2/ recueillir au moins deux signaux représentatifs d'une déviation du faisceau laser reçu par rapport à une direction de référence ; et

/3/ commander des rotations des moteurs (21) du système de pointage à partir des signaux représentatifs de la déviation du faisceau laser reçu, par une boucle simple d'asservissement de sorte que lesdites rotations des moteurs annulent sensiblement ladite déviation du faisceau laser reçu par rapport à la direction de référence.

suivant lequel l'étape /2/ comprend les sous-étapes suivantes :

/2-1/ déterminer une consigne de régulation à partir des signaux représentatifs de la déviation du faisceau laser reçu par rapport à la direction de référence, de sorte que des rotations fictives des moteurs (21) du système de pointage correspondant à ladite consigne de régulation annuleraient ladite déviation ;

/2-2/ évaluer au moins une perturbation de la variation du champ d'entrée du système d'émission-réception qui résulterait des dites rotations fictives des moteurs du système de pointage, et déterminer une consigne de compensation de la perturbation évaluée ; et

/2-3/ produire une consigne de rotation à partir d'un résultat d'une addition de la consigne de régulation et de la consigne de compensation,

et suivant lequel les rotations des moteurs (21) du système de pointage sont commandées à l'étape /3/ en utilisant ladite consigne de rotation.

7. Procédé selon la revendication 6, suivant lequel la perturbation est évaluée à l'étape /2-2/ en utilisant une table enregistrée ou un algorithme de calcul à entrées multiples, lesdites entrées étant sélectionnées dans un ensemble comprenant la consigne de régulation, la direction de référence, une température et au moins une vitesse de variation du système de pointage.

## Patentansprüche

1. Optisches Kommunikationsendgerät (102), das angepasst ist, um durch Laserstrahlmodulation mit zumindest einem anderen entfernten Endgerät (202), das sich in einem Kommunikationsabstand von über 10.000 km befindet, mit einer Richtgenauigkeit zwischen 2 und 20 $\mu$rad zu kommunizieren, wobei das Endgerät (102) Folgendes umfasst:

- ein System zum Senden und Empfangen von Lasersignalen (10), das seinerseits eine Photodetektorenanordnung (13) umfasst, die angeordnet ist, um einen vom entfernten Endgerät (202) erzeugten, empfangenen Laserstrahl zu detektieren, und angepasst ist, um während eines Verfolgungsschritts zumindest zwei Signale zu erzeugen, die für eine Abweichung des empfangenen Laserstrahls von einer Referenzrichtung repräsentativ sind; und

- ein alleiniges Richtsystem (20), das seinerseits zumindest zwei Motoren (21) umfasst, die angeordnet sind, um eine Ausrichtung eines optischen Eingangsfelds des Systems zum Senden und Empfangen für den empfangenen Laserstrahl in zwei verschiedenen Umdrehungsrichtungen zu verändern,

und **dadurch gekennzeichnet ist, dass** das Endgerät (102) ferner eine Verfolgungssteuerungseinheit (15) umfasst, die angeordnet ist, um Umdrehungen der Motoren (21) des Richtsystems während des Verfolgungsschritts anhand der Signale, die für die Abweichung des empfangenen Laserstrahls repräsentativ sind, durch eine einfache Servosteuerungsschleife zu steuern, sodass die Umdrehungen der Motoren die Abweichung des empfangenen Laserstrahls von der Referenzrichtung im Wesentlichen aufheben,

und dass die Verfolgungssteuerungseinheit (15) ihrerseits Folgendes umfasst:

- einen Regler (15b), der angepasst ist, um anhand der Signale, die für die Abweichung des empfangenen Laserstrahls von der Referenzrichtung repräsentativ sind, einen Regelungssollwert zu erzeugen, sodass fiktive Umdrehungen der Motoren (21), die gemäß dem Regelungssollwert gesteuert werden, die Abweichung aufheben würden;

- eine Evaluierungseinheit (15c), die angepasst ist, um zumindest eine Störung der Änderung des Eingangsfelds des Systems zum Senden und Empfangen (10), die aus den fiktiven Umdrehungen der Motoren resultiert, zu evaluieren und um einen Sollwert zur Kompensation der Störung zu erzeugen; und

- einen Summierer (15d), der angeordnet ist, um als Eingang den Regelungssollwert und den Kompensationssollwert zu empfangen, und geeignet ist, um einen Umdrehungssollwert zum Steuern der Motoren (21) des Richtsystems zu erzeugen, wobei der Umdrehungssollwert gleich der Summe des Regelungssollwerts und des Kompensationssollwerts ist.

2. Endgerät nach Anspruch 1, wobei die Evaluierungseinheit (15c) eine registrierte Lesetabelle mit mehreren Einträgen beinhaltet, die angepasst ist, um für jeweilige Eintragswerte der Tabelle einen Kompensationssollwert bereitzustellen, wobei die Einträge aus einer Gruppe, die den Regelungssollwert, die Referenzrichtung, eine Temperatur und zumindest eine Änderungsgeschwindigkeit des Richtsystems umfasst, ausgewählt sind.

3. Endgerät nach Anspruch 1, wobei die Evaluierungseinheit (15c) angepasst ist, um einen Kompensationssollwert in Abhängigkeit von jeweiligen Eintragswerten, die aus einer Gruppe, die den Regelungssollwert, die Referenzrichtung, eine Temperatur und zumindest eine Variationsgeschwindigkeit des Richtsystems umfasst, ausgewählt sind, zu berechnen.

4. Verwendung eines optischen Kommunikationsendgeräts nach einem der vorangehenden Ansprüche an Bord eines geostationären Satelliten (100).

5. Kommunikationsrelais, das angepasst ist, um an Bord eines geostationären Satelliten (100) angebracht zu sein und um Kommunikation zwischen einem relaisexternen Nutzerendgerät (202) und einer Erdstation (300) weiterzuleiten, wobei das Relais Folgendes umfasst:

- ein erstes optisches Kommunikationsendgerät (102), das vorgesehen ist, erste Kommunikationssignale mit dem Nutzerendgerät (202) auszutauschen, wobei die ersten Kommunikationssignale Lasersignale sind;
- ein zweites Kommunikationsendgerät (103), das angepasst ist, um zweite Kommunikationssignale mit der Erdstation (300) auszutauschen; und
- eine Kommunikationssignalübertragungseinheit (101), die angeordnet ist, um vom ersten Endgerät empfangene erste Kommunikationssignale in zweite Signale umzuwandeln, die vom zweiten Endgerät übertragen werden, und um vom zweiten Endgerät empfangene zweite Kommunikationssignale in erste Signale umzuwandeln, die vom ersten Endgerät übertragen werden,

wobei das Relais **dadurch gekennzeichnet ist, dass** das erste optische Kommunikationsendgerät (102) einem der Ansprüche 1 bis 3 entspricht.

6. Verfahren zur Ausrichtung eines optischen Eingangsfelds eines Systems zum Senden und Empfangen von Lasersignalen während eines Verfolgungsschritts, wobei das System zum Senden und Empfangen (10) eine Photodetektorenanordnung (13) umfasst, die angeordnet ist, um einen empfangenen Laserstrahl zu detektieren, wobei das Verfahren die folgenden Schritte umfasst:

/1/ Bereitstellen eines Richtsystems (20), das zumindest zwei Motoren (21) umfasst, die angeordnet sind, um die Ausrichtung des Eingangsfelds des Systems zum Senden und Empfangen in zwei verschiedenen Umdrehungsrichtungen zu ändern;
/2/ Sammeln von zumindest zwei Signale, die für eine Abweichung des empfangenen Laserstrahls von einer Referenzrichtung repräsentativ sind; und
/3/ Steuern der Umdrehungen der Motoren (21) des Richtsystems anhand der Signale, die für die Abweichung des empfangenen Laserstrahls repräsentativ sind, durch eine einfache Servosteuerungsschleife, sodass die Umdrehungen der Motoren die Abweichung des Laserstrahls von der Referenzrichtung im Wesentlichen aufheben,

demzufolge der Schritt /2/ die folgenden Unterschritte umfasst:

/2-1/ Bestimmen eines Regelungssollwerts anhand der Signale, die für die Abweichung des empfangenen Laserstrahls von der Referenzrichtung repräsentativ sind, sodass fiktive Umdrehungen der Motoren (21) des Richtsystems, die dem Regelungssollwert entsprechen, die Abweichung aufheben würden;
/2-2/ Evaluieren von zumindest einer Störung der Änderung des Eingangsfelds des Systems zum Senden und Empfangen, die aus den fiktiven Umdrehungen der Motoren des Richtsystems resultiert, und Bestimmen eines Sollwerts zur Kompensation der evaluierten Störung; und
/2-3/ Erzeugen eines Umdrehungssollwerts anhand eines Ergebnisses einer Addition des Regelungssollwerts und des Kompensationssollwerts,

und demzufolge die Umdrehungen der Motoren (21) des Richtsystems im Schritt /3/ unter Verwendung des Umdrehungssollwerts gesteuert werden.

7. Verfahren nach Anspruch 6, demzufolge die Störung in Schritt /2-2/ unter Verwendung einer registrierten Lesetabelle oder eines Berechnungsalgorithmus mit mehreren Einträgen evaluiert wird, wobei die Einträge aus einer Gruppe, die den Regelungssollwert, die Referenzrichtung, eine Temperatur und zumindest eine Änderungsgeschwindigkeit des Richtsystems umfasst, ausgewählt sind.

## Claims

1. Optical telecommunication terminal (102) configured to carry out communications by laser beam modulation with at least one other remote terminal (202) located at a communication distance greater than 10,000 km, with a pointing accuracy of between 2 and 20 μrad, said terminal (102) comprising:

   - a laser signal transmitting-receiving system (10) which in turn comprises a photodetector array (13) disposed so as to detect a received laser beam produced by said remote terminal (202), and configured to produce, during a tracking step, at least two signals representing a deflection of the received laser beam relative to a reference direction; and
   - a single pointing system (20), in turn comprising at least two motors (21) disposed so as to vary an orientation of an optical input field of the transmitting-receiving system for the received laser beam along two separate directions of rotation,

   and being **characterised in that** the terminal (102) further comprises a tracking control unit (15) disposed for controlling rotations of the motors (21) of the pointing system during the tracking step on the basis of signals representing the deflection of the received laser beam, by means of a single feedback loop so that said rotations of the motors essentially cancel out said deflection of the received laser beam relative to the reference direction, and **in that** the tracking control unit (15) in turn comprises:

   - a regulator (15b) configured to produce a regulation set point value on the basis of signals representing the deflection of the received laser beam relative to the reference direction, so that simulated rotations of the motors (21) controlled in accordance with said set point value cancel out said deflection;
   - an evaluation unit (15c) configured to evaluate at least one disturbance to the variation of the input field of the transmitting-receiving system (10) resulting from said simulated rotations of the motors and to produce a compensation set point value for compensating said disturbance; and
   - a summing unit (15d) disposed so as to receive the regulation set point value and the compensation set point value as input, and configured to produce a rotation set point value to control the motors (21) of the pointing system, said rotation set point value being equal to the sum of said regulation set point value and said compensation set point value.

2. Terminal as claimed in claim 1, in which the evaluation unit (15c) incorporates a multi-input look-up table stored, configured to provide a compensation set point value for respective values of inputs of said table, said inputs being selected from a set comprising the regulation set point value, the reference direction, a temperature and at least one variation speed of the pointing system.

3. Terminal as claimed in claim 1, in which the evaluation unit (15c) is configured to calculate the compensation set point value as a function of respective input values selected from a set comprising the regulation set point value, the reference direction, a temperature and at least one variation speed of the pointing system.

4. Use of an optical communication terminal as claimed in any one of the preceding claims on board a geostationary satellite (100).

5. Communication relay configured to be loaded on board a geostationary satellite (100) for relaying communications between a user terminal (202) external to the relay and a ground station (300), said relay comprising:

   - a first optical communication terminal (102) designed to exchange first communication signals with the user terminal (202), said first communication signals being laser signals;
   - a second communication terminal (103) configured to exchange second communication signals with the ground station (300); and

- a communication signal transfer unit (101) configured to convert first communication signals received by the first terminal into second signals transmitted by the second terminal, and to convert second communication signals received by the second terminal into first signals transmitted by the first terminal,

the relay being **characterised in that** said first optical communication terminal is as claimed in any one of claims 1 to 3.

6. Method of orienting an optical input field of a laser signal transmitting-receiving system during a tracking phase, said transmitting-receiving system (10) comprising an array of photodetectors (13) disposed so as to detect a received laser beam, said method comprising the following steps:

/1/ providing a pointing system (20) comprising at least two motors (21) disposed so as to vary the orientation of the input field of the transmitting-receiving system along two separate directions of rotation;

/2/ collecting at least two signals representing a deflection of the received laser beam relative to a reference direction; and

/3/ controlling rotations of the motors (21) of the pointing system on the basis of the signals representing the deflection of the received laser beam by means of a single feedback loop so that said rotations of the motors essentially cancel out said deflection of the received laser beam relative to the reference direction,

whereby step /2/ comprises the following sub-steps:

/2-1/ determining a regulation set point value on the basis of the signals representing the deflection of the received laser beam relative to the reference direction so that simulated rotations of the motors (21) of the pointing system corresponding to said regulation set point value cancel out said deflection;

/2-2/ evaluating at least one disturbance to the variation of the input field of the transmitting-receiving system that would result from said simulated rotations of the motors of the pointing system and determining a compensation set point value for the evaluated disturbance; and

/2-3/ producing a rotation set point value on the basis of a result obtained by adding the regulation set point value and the compensation set point value,

and whereby the rotations of the motors (21) of the pointing system are controlled during step /3/ using said rotation set point value.

7. Method as claimed in claim 6, whereby the disturbance is evaluated during step /2-2/ using a stored look-up table or a calculation algorithm with multiple inputs, said inputs being selected from a set comprising the regulation set point value, the reference direction, a temperature and at least one variation speed of the pointing system.

# FIG.1a.

FIG.1b.

FPM — 12

1ère CONSIGNE DE ROTATION — B1

RÉFERENCE

13

LASER REÇU +

MATRICE DE PHOTODETECTEURS

DIRECTION DE RÉCEPTION

DÉVIATION

14

CONTROLEUR PRINCIPAL

ROTATION DU MOTEUR

CPM

22

DÉTECTEUR ANGULAIRE

21

23

M

CONTROLEUR CPM

2ème CONSIGNE DE ROTATION — B2

20

COMMANDE D'ACQUISITION

EP 2 304 512 B1

17

FIG.2.

FIG.3.

FIG.4a.

EP 2 304 512 B1

FIG.4b.

FIG.5.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6970651 B
- US 2006024061 A
- US 6097481 A

**Littérature non-brevet citée dans la description**

- **C. CANUDAS DE WIT.** Linear Space-Invariant Control as an Alternative to Discontinuous Switching Controller. *Proceedings of the 6th IEEE VSS, Goal Coast, Australia,* 07 Décembre 2000, 135-146